# FASCICULE DE BREVET EUROPEEN

(11) **EP 0 684 170 B1**
(45) Date de publication et mention de la délivrance du brevet: **05.08.1998**
(21) Numéro de dépôt: 95107825.2
(22) Date de dépôt: 23.05.1995
(51) Int. Cl.: B60S 1/24

(54) **Module d'essuyage pour une vitre de véhicule automobile**
Wischermodul für eine Kraftfahrzeugscheibe
Wiper module for a motor vehicle window

(30) Priorité: 26.05.1994 FR 9406518
(43) Date de publication de la demande: 29.11.1995
(73) Titulaire: VALEO SYSTEMES D'ESSUYAGE, 78321 La Verrière (FR)
(72) Inventeur: Pedreau, Serge, F-86100 Chatellerault (FR); Boissac, Jean-Paul, F-86100 Chatellerault (FR)
(74) Mandataire: Gamonal, Didier

(56) Documents cités:
- EP-A- 0 484 175
- GB-A- 2 218 622

## Description

La présente invention concerne un module d'essuyage pour vitre de véhicule automobile.

Les agencements connus de modules d'essuyage sont généralement du type comportant une platine principale de support qui comporte des moyens pour permettre sa fixation sur une partie de la caisse du véhicule et sur laquelle sont agencés divers organes d'entraînement, dont notamment un groupe motoréducteur, d'un premier bras d'essuie-glace disposé sensiblement en position centrale par rapport au bord de la vitre à essuyer et d'un second bras d'essuie-glace disposé en position décalée latéralement par rapport au premier bras et monté sur un arbre secondaire de sortie porté par une platine secondaire, la platine principale portant à une première extrémité un arbre principal de sortie sur lequel est monté le premier bras d'essuie-glace, et comportant, à une seconde extrémité opposée à la première extrémité, des moyens pour le montage d'un palier secondaire de fixation de la platine principale. Un tel module d'essuyage est par exemple décrit dans GB-A-2 218 622.

Cette conception permet d'assurer de manière aisée le montage du module sur la caisse du véhicule et d'assurer l'entraînement en balayage alternatif, simultané ou opposé, des deux bras d'essuie-glace.

Les véhicules automobiles, selon le pays d'utilisation, ont un poste de conduite situé à gauche, par rapport à l'axe longitudinal médian du véhicule, ou à droite.

Les conceptions actuelles des modules d'essuyage ne permettent pas une standardisation des composants pour l'utilisation d'un même module d'essuyage quelle que soit la position du poste de conduite.

La présente invention a pour but de proposer une nouvelle conception d'un module d'essuyage qui permet de remédier à cet inconvénient.

Dans ce but, l'invention propose un module d'essuyage du type mentionné précédemment, caractérisé en ce la platine secondaire est fixée sur le véhicule à l'opposé de ladite seconde extrémité par rapport à l'arbre principal de sortie.

Selon un autre aspect de l'invention tel que défini dans la revendication 2, la platine secondaire est fixée sur le véhicule à l'opposé de ladite seconde extrémité par rappel à l'arbre principal de sortie, et la platine secondaire est apte à remplacer le palier secondaire de fixation à ladite seconde extrémité.

Selon divers modes de réalisation de l'invention:
- la platine secondaire comporte un corps comportant un moignon pour le montage d'un palier de fixation de la platine secondaire sur la caisse du véhicule, le palier secondaire de fixation comporte un moignon de montage et chaque moignon peut être introduit dans ladite seconde extrémité ;
- la platine principale comporte un corps en forme de poutre ;
- ladite seconde extrémité est constituée par une extrémité creuse de la poutre qui délimité un logement destiné à recevoir l'un desdits moignons ;
- la poutre est une poutre tubulaire ;
- l'arbre principal de sortie est lié en rotation à une tringlerie de renvoi de mouvements vers l'arbre secondaire de sortie ;
- la tringlerie de renvoi de mouvement comporte une bielle principale de renvoi de mouvement qui est liée en rotation à l'arbre principal de sortie et une barre de transmission de mouvement dont une extrémité est articulée sur la bielle principale et dont l'autre extrémité est reliée à une bielle secondaire liée en rotation à l'arbre secondaire de sortie.
- la platine principale de support porte un ensemble motoréducteur agencé sensiblement dans la partie centrale de la platine et qui comporte une manivelle de sortie qui est reliée à un élément lié en rotation avec l'arbre principal de sortie ; et
- la manivelle est reliée à la bielle principale par une barre principale de transmission de mouvement.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective d'un exemple de réalisation de la platine principale du module d'essuyage associée à divers accessoires;
- la figure 2 est une vue similaire à celle de la figure 1 sur laquelle le module d'essuyage comporte la tringlerie de renvoi de mouvement pour équiper un véhicule à conduite à droite ;
- la figure 3 est une vue similaire à celle de la figure 2 illustrant un autre angle de vue en perspective du module d'essuyage ;
- la figure 4 est une vue à plus grande échelle en perspective d'un mode de réalisation de la platine secondaire.

Le module d'essuyage illustré sur les figures comporte une platine principale 10 qui est constituée pour l'essentiel par une poutre tubulaire creuse 12.

Une plaque 14 formant plateau de montage est rapportée sur le tronçon central 16 de la poutre 12 de la platine principale 10 et elle sert de support à un groupe motoréducteur 18 dont l'arbre moteur 20 entraîne en rotation une manivelle 22.

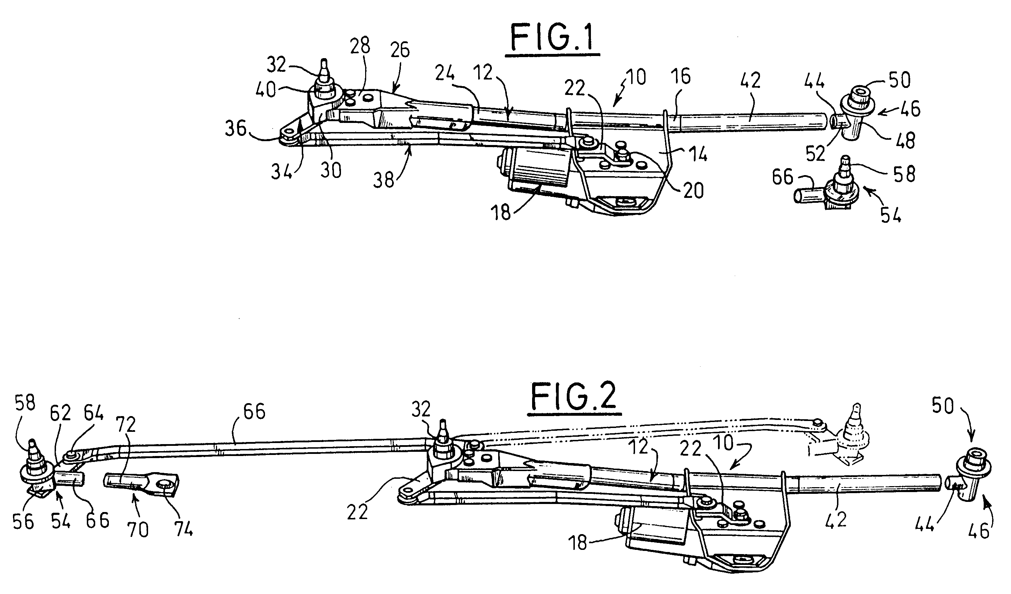

Un premier tronçon latéral 24 de la poutre tubulaire 12 s'étend latéralement, vers la gauche en considérant la figure 1, et son extrémité 26 est équipée d'un manchon rapporté 28 qui assure la fixation d'un boîtier 30 hors duquel fait saillie verticalement vers le haut un arbre principal de sortie 32 qui est prévu pour recevoir un premier bras d'essuie-glace.

Le premier bras d'essuie-glace est ainsi agencé en position centrale par rapport au bord longitudinal inférieur du pare-brise à essuyer (non représenté).

L'entraînement en rotation alternée de l'arbre principal 32 est assuré par une bielle principale de renvoi de mouvement 34 dont une première extrémité 36 reçoit, avec articulation, une extrémité d'une barre principale 38 dont l'autre extrémité est montée avec articulation, sur la manivelle 22.

La rotation de la manivelle 22 assure ainsi une rotation alternée de l'arbre principal de sortie 32.

La partie supérieure 40 du boîtier 30 permet également la fixation de la platine principale 10 sur la caisse du véhicule formant ainsi un palier principal de fixation.

Le tronçon latéral de droite 42 de la poutre tubulaire creuse 12 de la platine principale 10 présente une extrémité ouverte 44 qui délimite un logement creux destiné, conformément aux enseignements de l'invention, à recevoir l'un ou l'autre de deux type d'organes.

Comme cela est illustré à la partie droite de la figure 1, l'extrémité 44 peut recevoir un palier secondaire 46 de fixation de la platine principale 10 sur la caisse du véhicule qui est pour l'essentiel constitué par un corps de palier 48 comportant à sa partie supérieure un palier élastique 50 et comportant un moignon de montage 52 réalisé sous la forme d'un tronçon cylindrique qui est prévu pour être reçu dans le logement creux formé à l'extrémité 44 de la poutre 12.

L'extrémité 44 peut, en lieu et place du palier 46, recevoir une platine secondaire 54.

La platine secondaire 54 est pour l'essentiel constituée par un boîtier 56 qui est traversé à rotation par un arbre secondaire de sortie 58 dont l'extrémité supérieure est susceptible de recevoir un second bras d'essuie-glace pour l'entraînement en rotation alternée de ce dernier.

La partie supérieure 60 du boîtier 56 peut comporter des moyens formant palier pour sa fixation sur la caisse du véhicule.

La partie inférieure de l'arbre secondaire de sortie 58 est lié en rotation à une bielle 62 dont une extrémité comporte une rotule 64 pour l'accrochage d'une extrémité d'une barre secondaire de transmission de mouvement.

Le boîtier 56 comporte également un moignon 66 qui est réalisé sous la forme d'un tronçon cylindrique qui est prévu pour permettre son montage dans le logement 44.

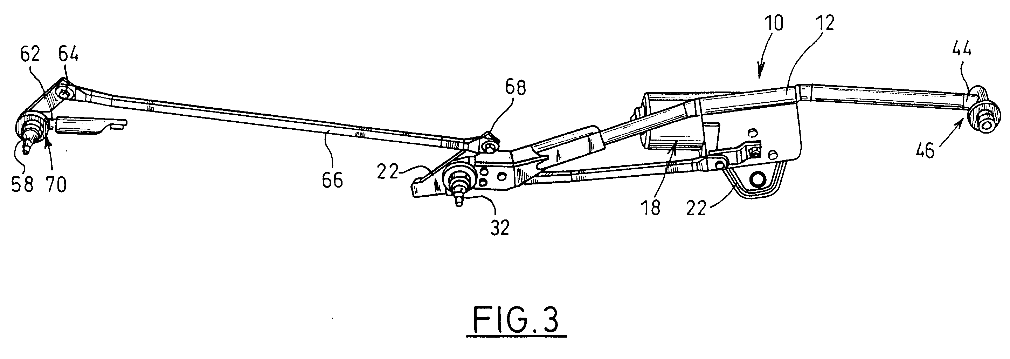

Dans le mode d'installation illustré sur la figure 2, la platine secondaire 54 est prévue pour être fixée directement sur le véhicule à l'opposé de l'extrémité 44 (par rapport à l'arbre principal de sortie 32) et la bielle 62 est reliée, par une barre rectiligne 66 de transmission de mouvement, à l'extrémité libre 68 de la manivelle principale 22 (voir figures 2 et 3).

Dans ce mode d'agencement, l'extrémité 44 de la poutre 12 reçoit le palier secondaire de fixation 50.

La rotation de la manivelle principale 22 assure donc l'entraînement en rotation alternée et simultanée de l'arbre principal de sortie 32 et de l'arbre secondaire de sortie 58.

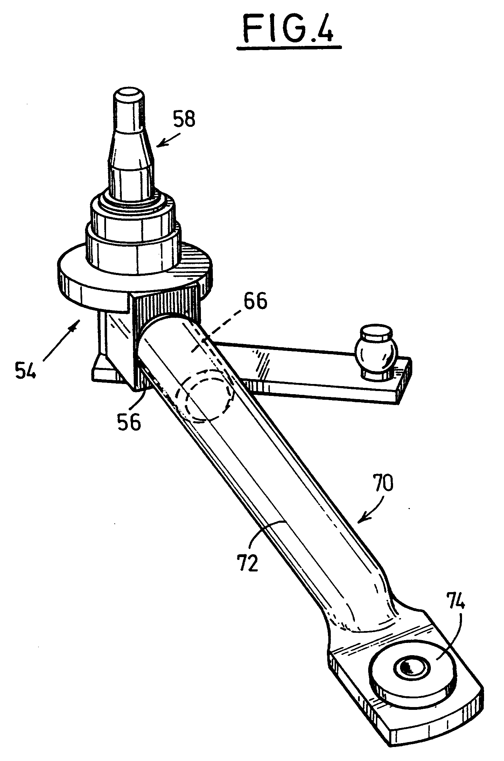

Comme cela est illustré aux figures 2 à 4, la fixation de la platine secondaire 54 sur la caisse du véhicule peut également être assurée au moyen d'un organe complémentaire 70 qui comporte un tube creux de montage 72 prévu pour être enfilé sur la moignon 66 solidaire du boîtier 56 et dont l'autre extrémité comporte un palier élastique de fixation 74.

Si l'on veut utiliser la même module d'essuyage pour équiper un véhicule avec poste de conduite à gauche, et comme cela est illustré en silhouette sur la figure 2, il suffit de remplacer, à l'extrémité 44, le palier secondaire de fixation 50 par la platine secondaire de fixation 54 illustrée à la figure 1 et à la partie gauche de la figure 2, le moignon 66 de cette dernière étant introduit dans l'extrémité 44. L'ensemble est alors un module d'essuyage compact constitué de la platine principale 10 et de la platine secondaire 54 fixée à l'extrémité 44 de celle-ci.

Ainsi, à l'aide de composants standardisés, il est possible de réaliser un module d'essuyage pouvant s'adapter aisément sur un véhicule à poste de conduite à gauche ou à droite sans avoir à modifier la structure de la platine principale de support ni la conception de l'élément de structure de la caisse du véhicule sur lequel sont fixés les différents paliers de fixation.

Notamment, dans le cas de l'agencement illustré en trait plein sur la figure 2, la conception de cet élément de structure de la caisse du véhicule est identique à celle qu'il présente dans le cas d'un véhicule à poste de conduite à gauche.

L'arbre principal de sortie 32 est commun aux deux agencements, à gauche ou à droite, et assure l'entraînement en rotation alternée de l'arbre d'essuie-glace qui est agencé dans une position sensiblement centrale.

## Revendications

1. Module d'essuyage pour une vitre de véhicule automobile du type comportant une platine principale (10, 12) de support qui comporte des moyens pour permettre sa fixation sur une partie de la caisse du véhicule et sur laquelle sont agencés divers organes (18) d'entraînement d'un premier bras d'essuie-glace disposé sensiblement en position centrale par rapport au bord de la vitre à essuyer et d'un second bras d'essuie-glace disposé en position décalée latéralement par rapport au premier bras et monté sur un arbre secondaire de sortie (58) porté par une platine secondaire (54), la platine principale (10, 12) portant à une première extrémité (26) un arbre principal de sortie (32) sur lequel est monté le premier bras d'essuie-glace, et comportant, à une seconde extrémité (44) opposée à la première extrémité (26), des moyens pour le montage d'un palier secondaire (50) de fixation de la platine principale, caractérisé en ce que la platine secondaire (54) est fixée sur le véhicule à l'opposé de ladite seconde extrémité (44) par rapport à l'arbre principal de sortie (32).

2. Module d'essuyage pour une vitre de véhicule automobile du type comportant une platine principale (10, 12) de support qui comporte des moyens pour permettre sa fixation sur une partie de la caisse du véhicule et sur laquelle sont agencés divers organes (18) d'entraînement d'un premier bras d'essuie-glace disposé sensiblement en position centrale par rapport au bord de la vitre à essuyer et d'un second bras d'essuie-glace disposé en position décalée latéralement par rapport au premier bras et monté sur un arbre secondaire de sortie (58) porté par une platine secondaire (54), la platine principale (10, 12) portant à une première extrémité (26) un arbre principal de sortie (32) sur lequel est monté le premier bras d'essuie-glace, et comportant, à une seconde extrémité (44) opposée à la première extrémité (26), des moyens pour le montage d'un palier secondaire (50) de fixation de la platine principale, caractérisé en ce que la platine secondaire (54) est fixée sur le véhicule à l'opposé de ladite seconde extrémité (44) par rapport à l'arbre principal de sortie (32), et en ce que la platine secondaire (54) est apte à remplacer le palier secondaire de fixation (50) à ladite seconde extrémité (44).

3. Module d'essuyage selon la revendication 1 ou 2, caractérisé en ce que la platine secondaire (54) comporte un corps (56) comportant un moignon (66) pour le montage d'un palier (70, 72, 74) de fixation de la platine secondaire (54) sur la caisse du véhicule, en ce que le palier secondaire de fixation (54) comporte un moignon de montage (52) et en ce que chaque moignon (66,52) peut être introduit dans ladite seconde extrémité (44).

4. Module d'essuyage selon la revendication 3, caractérisé en ce que la platine principale (10) comporte un corps en forme de poutre.

5. Module d'essuyage selon la revendication 4, caractérisé en ce que ladite seconde extrémité (44) est constituée par une extrémité (44) creuse de la poutre qui délimite un logement destiné à recevoir l'un desdits moignons (66,52).

6. Module d'essuyage selon l'une des revendications 4 ou 5, caractérisé en ce que la poutre est une poutre tubulaire (12).

7. Module d'essuyage selon l'une quelconque des revendications précédentes, caractérisé en ce que l'arbre principal de sortie est lié en rotation à une tringlerie (34, 66) de renvoi de mouvements vers l'arbre secondaire de sortie (58).

8. Module d'essuyage selon la revendication 7, caractérisé en ce que la tringlerie de renvoi de mouvement comporte une bielle principale de renvoi de mouvement (34) qui est liée en rotation à l'arbre principal de sortie (32) et une barre (66) de transmission de mouvement dont une extrémité est articulée sur la bielle principale (34) et dont l'autre extrémité est reliée à une bielle secondaire (62) liée en rotation à l'arbre secondaire de sortie (58).

9. Module d'essuyage selon l'une quelconque des revendications 7 et 8, caractérisé en ce que la platine principale de support (10) porte un ensemble motoréducteur (18) agencé sensiblement dans la partie centrale de la platine, et comporte une manivelle de sortie (22) qui est reliée à un élément (34) lié en rotation avec l'arbre principal de sortie (32).

10. Module d'essuyage selon la revendication 9 prise en combinaison avec la revendication 8, caractérisé en ce que la manivelle (22) est reliée à la bielle principale (34) par une barre (66) de transmission de mouvement.

## Claims

1. A wiper module for a motor vehicle glass, of the type comprising a main support bracket (10, 12), which includes means for enabling it to be fastened on a part of the body of the vehicle, and on which various components (18) are arranged for driving a first screen wiper arm disposed substantially in a central position with respect to the edge of the glass to be swept, and a second screen wiper arm disposed in a position which is offset laterally with respect to the first arm, and which is mounted on a secondary output spindle (58) carried by a secondary bracket (54), the main bracket (10, 12) carrying at a first end (26) a main output spindle (32) on which the first screen wiper arm is mounted, and including, at a second end (44) opposed to the first end (26), means for mounting a secondary support member (50) for fastening the main bracket, characterised in that the secondary bracket (54) is fixed on the vehicle on the opposite side from the said second end (44), with respect to the main output spindle (32).

2. A wiper module for a motor vehicle glass, of the type comprising a main support bracket (10, 12), which includes means for enabling it to be fastened on part of the body of the vehicle, and on which various components (18) are arranged for driving a first screen wiper arm disposed substantially in a central position with respect to the edge of the glass to be swept, and a second screen wiper arm disposed in a position which is offset laterally with respect to the first arm, and which is mounted on a secondary output spindle (58) carried by a secondary bracket (54), the main bracket (10, 12) carrying at a first end (26) a main output spindle (32) on which the first screen wiper arm is mounted, and including, at a second end (44) opposed to the first end (26), means for mounting a secondary support member (50) for fastening the main bracket, characterised in that the secondary bracket (54) is fixed on the vehicle on the opposite side from the said second end (44), with respect to the main output spindle (32), and in that the secondary bracket (54) is adapted to replace the secondary fastening bearing (50) at the said second end (44).

3. A wiper module according to Claim 1 or Claim 2, characterised in that the secondary bracket (54) has a body (56) which includes a spigot (66) for mounting a support member (70, 72, 74) for fastening the secondary bracket (54) on the body of the vehicle, in that the secondary fastening support member (54) includes a mounting spigot (52), and in that each spigot (66, 52) is able to be introduced into the said second end (44).

4. A wiper module according to Claim 3, characterised in that the main bracket (10) has a body in the form of a beam.

5. A wiper module according to Claim 4, characterised in that the said second end (44) consists of a hollow end (44) of the beam which defines a housing adapted to receive one of the said spigots (66, 52).

6. A wiper module according to Claim 4 or Claim 5, characterised in that the beam is a tubular beam (12).

7. A wiper module according to any one of the preceding Claims, characterised in that the main output spindle is coupled in rotation to a linkage (34, 66) for redirecting motion towards the secondary output spindle (58).

8. A wiper module according to Claim 7, characterised in that the motion redirecting linkage comprises a main motion redirecting crank (34), which is coupled in rotation to the main output spindle (32), and a motion transmitting rod (66), one end of which is articulated on the main crank (34), with its other end being coupled to a secondary crank (62) which is coupled in rotation to the secondary output spindle (58).

9. A wiper module according to Claim 7 or Claim 8, characterised in that the main support bracket (10) carries a motorised reduction drive unit (18) arranged substantially in the central part of the bracket, and includes an output crank (22) which is coupled to an element (34) coupled in rotation to the main output spindle (32).

10. A wiper module according to Claim 9 taken in combination with Claim 8, characterised in that the output crank (22) is coupled to the main crank (34) through a motion transmitting rod (66).

## Patentansprüche

1. Wischermodul für eine Kraftfahrzeugscheibe, umfassend eine Haupthalterung (10, 12), die Mittel umfaßt, um seine Befestigung an einem Teil der Karosserie des Fahrzeugs zu ermöglichen, und auf der verschiedene Antriebsorgane (18) für einen ersten Scheibenwischerarm, der in etwa in mittiger Position, bezogen auf die Kante der zu wischenden Scheibe, angeordnet ist, und für einen zweiten Scheibenwischerarm angebracht sind, der in einer seitlich versetzten Position, bezogen auf den ersten Arm, angeordnet und an einer auf einer Sekundärhalterung (54) angebrachten Sekundärausgangswelle (58) gelagert ist, wobei die Haupthalterung (10, 12) an einem ersten Ende (26) eine Hauptausgangswelle (32) trägt, an der der erste Scheibenwischerarm gelagert ist, während sie an einem dem ersten Ende (26) gegenüberliegenden zweiten Ende (44) Mittel zur Anbringung eines Sekundärlagers (50) für die Befestigung der Haupthalterung umfaßt , **dadurch gekennzeichnet,** daß die Sekundärhalterung (54) am Fahrzeug gegenüber dem besagten zweiten Ende (44), bezogen auf die Hauptausgangswelle (32), befestigt ist.

2. Wischermodul für eine Kraftfahrzeugscheibe, umfassend eine Haupthalterung (10, 12), die Mittel umfaßt, um seine Befestigung an einem Teil der Karosserie des Fahrzeugs zu ermöglichen, und auf der verschiedene Antriebsorgane (18) für einen ersten Scheibenwischerarm, der in etwa in mittiger Position, bezogen auf die Kante der zu wischenden Scheibe, angeordnet ist, und für einen zweiten Scheibenwischerarm angebracht sind, der in einer seitlich versetzten Position, bezogen auf den ersten Arm, angeordnet und an einer auf einer Sekundärhalterung (54) angebrachten Sekundärausgangswelle (58) gelagert ist, wobei die Haupthalterung (10, 12) an einem ersten Ende (26) eine Hauptausgangswelle (32) trägt, an der der erste Scheibenwischerarm gelagert ist, während sie an einem dem ersten Ende (26) gegenüberliegenden zweiten Ende (44) Mittel zur Anbringung eines Sekundärlagers (50) für die Befestigung der Haupthalterung umfaßt , **dadurch gekennzeichnet,** daß die Sekundärhalterung (54) am Fahrzeug gegenüber dem besagten zweiten Ende (44), bezogen auf Hauptausgangswelle (32), befestigt ist und daß die Sekundärhalterung (54) das Sekundärlager (50) zur Befestigung an dem besagten zweiten Ende (44) ersetzen kann.

3. Wischermodul nach Anspruch 1 oder 2, **dadurch gekennzeichnet**, daß die Sekundärhalterung (54) einen Körper (56) mit einem Stumpf (66) für die Anbringung eines Lagers (70, 72, 74) zur Befestigung der Sekundärhalterung (54) an der Karosserie des Fahrzeugs umfaßt, daß das Sekundärlager (54) zur Befestigung einen Einbaustumpf (52) umfaßt und daß jeder Stumpf (66, 52) in das besagte zweite Ende (44) eingefügt werden kann.

4. Wischermodul nach Anspruch 3, **dadurch gekennzeichnet,** daß die Haupthalterung (10) einen Körper in Form eines Trägers umfaßt.

5. Wischermodul nach Anspruch 4, **dadurch gekennzeichnet,** daß das besagte zweite Ende (44) aus einem hohlen Ende (44) des Trägers besteht, das eine Aufnahme für das Einsetzen eines der besagten Stümpfe (66, 52) begrenzt.

6. Wischermodul nach einem der Ansprüche 4 oder 5, **dadurch gekennzeichnet,** daß der Träger ein rohrförmiter Träger (12) ist.

7. Wischermodul nach einem der vorangehenden Ansprüche, **dadurch gekennzeichnet**, daß die Hauptausgangswelle drehfest mit einem Umlenkgestänge (34, 66) für die Übertragung der Bewegung zur Sekundärausgangswelle (58) verbunden ist.

8. Wischermodul nach Anspruch 7, **dadurch gekennzeichnet,** daß das Umlenkgestänge eine Hauptumlenkstange (34), die drehfest mit der Hauptausgangswelle (32) verbunden ist, und eine Bewegungsübertragungsstange (66) umfaßt, von der ein Ende an der Hauptumlenkstange (34) angelenkt ist und deren anderes Ende mit einer Sekundärgelenkstange (62) verbunden ist, die drehfest mit der Sekundärausgangswelle (58) verbunden ist.

9. Wischermodul nach einem der Ansprüche 7 und 8, **dadurch gekennzeichnet,** daß die Haupthalterung (10) eine Getriebemotoreinheit (18) trägt, die in etwa im mittleren Teil der Halterung angeordnet ist, und eine Ausgangskurbel (22) umfaßt, die mit einem Element (34) verbunden ist, das drehfest mit der Hauptausgangswelle (32) verbunden ist.

10. Wischermodul nach Anspruch 9 in Kombination mit Anspruch 8 , **dadurch gekennzeichnet,** daß die Kurbel (22) mit der Hauptgelenkstange (32) durch eine Bewegungsübertragungsstange (66) verbunden ist.
